# EUROPEAN PATENT APPLICATION

(11) **EP 2 275 390 A1**
(43) Date of publication of application: **19.01.2011**
(21) Application number: 09165419.4
(22) Date of filing: 14.07.2009
(51) Int. Cl.: C04B 28/04

(54) **Cementitious matrices for high performance fibre reinforced cement composites (HPFRCC), in particular ultra-high performance fibre reinforced concretes (UHPFRC)**

(71) Applicant: École Polytechnique Fédérale de Lausanne (EPFL), 1015 Lausanne (CH)
(72) Inventor: Denarié, Emmanuel, 1024 Ecublens (CH); Houst, Yves, 1009 Pully (CH)
(74) Representative: Ganguillet, Cyril

(57) **Abstract**

A cementitious matrix for Ultra-High Performance Fibre Reinforced Concrete (UHPFRC) containing the following constituents (in % mass of dry mix):
a) 25 to 65 % Portland cement type CEM I;
b) 25 to 70 % of Limestone filler;
c) 5 to 15 % ultrafine mineral additions;
d) 0 to 50 % fine sand with a diameter superior to 100 mm and lower than 5 mm.

The invention also provides the corresponding UHPFRC cementitious mixture and element.

## Description

### FIELD OF THE INVENTION

The present invention relates to Ultra-High Performance Fibre Reinforced Concrete (UHPFRC) cementitious formulations and mixes and to a method for the preparation of such formulations.

### BACKGROUND OF THE INVENTION

UHPFRC were originally developed with focus on the optimization of their ultra dense matrix, with a special attention to the increase of the compressive strength, above 200 MPa. This lead to a dramatic decrease of the intrinsic permeability, by optimization of the packing of grains with micro fillers and decrease of the water/binder ratio. This very brittle matrix was subsequently reinforced by a fibrous mix. UHPFRC are characterized by a high compressive tensile strength (above 150 MPa) and high tensile strength (above 10 MPa) and flexural or tensile strain-hardening depending on their fibrous mix.

Various types of UHPFRC exist with different kinds of fibre mixes. With only one type of fibres, a compromise has to be found between the tensile behaviour pre and post peak, with limited strain hardening. On the contrary, the combination of multiple types of fibres with different lengths creates a multilevel reinforcement that induces significant tensile strain hardening (up to 0.2 %), and distributed cracking under tension.

In the fresh state, despite their very low water/binder ratio, special UHPFRC can be tailored to be self-compacting and tolerate slopes up to 5 %. This requires optimum cement-superplasticizer compatibility and very high paste content with almost no more aggregates. It is however extremely difficult to achieve at the same time a self compacting character at fresh state and a tensile strain hardening response with high fibre dosages (up to 9 % vol.).

The very low water/binder ratio (0.130 to 0.200) of UHPFRC realized with pure CEM I cement prevents the complete hydration of a major part of the binders and gives the material a significant hydrophilic behaviour, and a self healing capacity for microcracks. This means that the degree of hydration of such mixes remains low (< 0.5) and that a majority of the cement used acts as an expensive inert filler in those mixes.

UHPFRC materials have been originally designed and applied with a view to prefabrication in combination with prestressing, and no rebars, thus focusing mostly on compressive strength and durability performance. In such applications, the UHPFRC are most often heat cured at early age to accelerate their maturation and improve their properties.

More recently, it has been proposed to use UHPFRC for cast-on site rehabilitation or reinforcement of bridges, with or without reinforcement bars. This kind of application clearly requires a significant tensile strain hardening performance with more demanding requirements on the fibrous mix and workability of the UHPFRC. Heat treatment is also impossible to apply on sites.

Many different types of UHPFRC recipes with various matrices and fibrous mixes are currently under development worldwide. However, no solution provides at the same time the conditions of tensile strain hardening, low permeability, high tensile and compressive strength and self compacting character needed for cast-in situ applications. Most often, the workability barrier remains an obstacle to the use of an efficient fibrous mix to achieve true tensile strain hardening and/or other drawbacks are also encountered such as higher shrinkage, limited availability of the materials, variability of the composition of the industrial by-products, high scatter of properties due to an insufficient fibrous mix.

Limestone fillers in cementitious materials are currently accepted up to 35 % cement replacement in European standards (EN 197-1). In Switzerland, the majority of cements sold are for some years type II ones including Limestone fillers up to 20 % mass.

UHPFRC with high to very high dosages of mineral additions (fly ash and/or Ground Granulated Blast Furnace Slag - GGBFS) have been recently proposed.

Finally, it is also known to use high to very high (up to 50 %) dosages of mineral additions (fly ash and GGBFS) to produce low cost-sustainable binders for concretes with low to moderate compressive strength and high flowability. The durability and drying shrinkage characteristics of those materials are however not fully established.

Thus, there is a need for a cementitious formulations and mixtures avoiding the above-mentioned drawbacks.

### SUMMARY OF THE INVENTION

Most cement-superplasticizer compatibility problems are related to unsatisfactory interactions between cement chemical components and the dispersive action of super plasticizers. Further, the very low water/binder ratio of UHPFRC in the range of 0.2 or less induces a very low degree of hydration of cement grains at long term (typically 0.3 to 0.5). Thus most of the cement in UHPC (Ultra High Performance Concrete) matrices is used for packing and workability but will never contribute to hydration, at best to self-healing properties.

Therefore, a general aim of the invention is to provide a solution for the replacement of very significant parts of the "inactive" cement grains in UHPC matrices by other grains, that have a more "neutral" or even positive response towards the superplasticizer and still exhibit a morphology and size distribution close to that of the cement, without "disturbing" to a significant extend the original packing.

A further aim of the invention is to provide a formulation and mixture methodology adapted to the wide dissemination of UHPFRC technology, allowing UHPFRC formulations from local components, specially in very demanding applications such as cast-in situ rehabilitation works.

Still another aim of the invention is to provide formulations and mixtures and a method for the preparation of cementitious formulations allowing achieving sufficient workability when replacing ingredients from existing optimized UHPFRC recipes by locally available ones.

A further aim of the invention is to provide formulations and mixtures particularly adapted for uses in rehabilitation or reinforcement of bridges, road, tunnel or other civil engineering works, and more particularly providing good mechanical resistance and low permeability.

Insufficient workability most often either forces to increase water dosage and water/cement ratio which severely decreases all performances of UHPFRC or prevents the use of a sufficient fibrous mix to achieve tensile strain hardening. Yet another aim of the invention is to provide formulations and mixtures allowing not reducing performances while increasing the workability.

These aims are achieved thanks to the method of preparation of a cementitious matrix for UHPFRC and a cementitious matrix and mixture defined in the claims.

There is accordingly provided a method for the preparation of a cementitious matrix for Ultra-High Performance Fibre Reinforced Concrete (UHPFRC) in which at least 25 % and preferably at least 40 % of the cement mass is replaced by the equivalent mass of limestone filler, so that the resulting limestone filler content in percentage of dry mix is between 25 to 70 % of the matrix mass.

Replacement of cement by limestone filler (50 % - eventually 40 to 65 % mass) allows breaking the workability barrier in the formulation of top level self compacting Ultra High Performance Fibre Reinforced Concretes with tensile Strain hardening, made of locally available components (cement, superplasticizer, among others). Limestone fillers (cheap and available in large quantities worldwide) with a morphology and size distribution close to that of the cement and specific requirements on the mineralogy are excellent candidates for this replacement.

In a preferred embodiment, substantially 50 % of the cement mass is replaced by the equivalent mass of limestone filler. The resulting limestone filler content in percentage of dry mix is advantageously between 35 to 45 % of the matrix mass.

The invention also provides a cementitious matrix for Ultra-High Performance Fibre Reinforced Concrete (UHPFRC) containing the following constituents (in % mass of dry mix):
a) 25 to 65 % Portland cement type CEM I;
b) 25 to 70 % of Limestone filler;
c) 5 to 15 % ultrafine mineral additions;
d) 0 to 50 % fine sand with a diameter superior to 0.1 mm and lower than 5 mm.

The characteristics of this matrix allow achieving at the same time a self compacting character at fresh state and very low permeability and a tensile strain hardening response with high fibre dosages (up to 9 % vol.).

The matrix is meant for the production of Ultra High Performance Fibre Reinforced Concretes with cements and superplasticizers available locally.

The matrix helps improve dramatically the workability of UHPFRC mixes without significantly decreasing the protective or mechanical properties of those mixes. Additionally, the heat of hydration remains close or smaller to the one measured on a mix with 100 % Portland cement and the autogenous shrinkage is smaller.

The matrix helps produce UHPFRC from local components on the basis of existing recipes, in a very efficient and cost effective way, also with respect to CO₂ balance considerations. In fact, one of the major advantages of limestone fillers is their worldwide availability in large quantities and the relative simplicity of their chemical composition.

Some of the other major advantages of this quasi inert mineral "addition" are the following:
- Improvement of workability;
- Improvement of surface rendering of concretes (colour and limitation of air voids);
- Synergetic use with other industries (road construction, paper, etc.);
- Reduction of CO₂ emissions associated to cementitious binders;
- Acceleration of the hydration reaction by nucleation effect.

In a further variant, the Calcite (CaCo3) content of the limestone filler is preferably superior to 80 %, and most preferably superior to 90 %. A limestone filler of size distribution close to that of the cement is also preferably used.

The limestone filler particle diameter is advantageously between 0.1 and 100 microns.

In a further embodiment, the matrix preferably comprises 5 to 15 % ultrafine mineral additions. In a variant, silica fume with a diameter D90 smaller than 5 microns is used.

The Silica fume dosage is decreased by the same factor as the cement of substantially two to keep a Silica Fume/Cement ratio identical to the reference mix with pure CEM I cement. This decrease of the absolute Silica fume dosage also improves the workability but to an extend not sufficient to achieve self-compacting strain hardening UHPFRC.

In a preferred variant, a superplasticizer (used as a High Range Water Reducer) is added to achieve the necessary workability.

In a further variant, the matrix also comprises up to substantially 50 % fine sand with a diameter superior to 0.1 mm and lower than 5 mm.

In still another variant, the cement is Portland cement type CEM I 52.5 R or N. In another variant, Portland cement type CEM I 42.5 is also used.

Finally, the super plasticizer dosage - considered with respect to the total mass of (Cement + Limestone filler)- is kept similar as for the reference mix with pure cement or changed according to the targeted workability.

Following this concept, the effective water/cement ratio of the mix is significantly increased and the degree of hydration at the same age too, without affecting the UHPFRC performance. The limestone fillers grains just replace unhydrated cement as it is in the original recipe, with a dramatic improvement of workability, thus allowing the realization of UHPFRC with virtually any locally available cement and superplasticizer.

The invention also provides an Ultra-High Performance Fibre Reinforced (UHPFRC) cementitious mixture comprising the following constituents:
a) 20 to 45 % Portland cement type CEM I;
b) 20 to 45 % of Limestone filler;
c) 3 to 10 % ultrafine mineral additions;
d) 2 to 11 % and preferably 3 to 9 % reinforcing steel fibres (single or combinations). In a preferred embodiment, the water/(cement + filler) ratio is between 0.120 and 0.250.

In a variant, the steel fibres are combined with synthetic fibres. The fibre percentage -item d) above - is then between 0.5 % to 4% and preferably between 0.5 to 2%. For instance, textile fibres such as polyvinyl alcohol (PVA), aramid, carbon, high-density polyethylene, or combinations thereof may be used.

In still another variant, the steel fibres are replaced by synthetic fibres. The fibre percentage is then between 0.5 % to 4% and preferably between 0.5 to 2%. For instance, textile fibres such as polyvinyl alcohol (PVA), aramid, carbon, high-density polyethylene, or combinations thereof may be used.

In another variant, the mixture further comprises a superplasticizer.

In a still further embodiment, the dosage (total liquid + dry extract) is between 2 and 4 % of the Cement + Limestone filler total mass.

The invention further provides a monolithic or composite structural member, prefabricated or cast on site made of a concrete, steel, and the cementitious mixture as previously described. Such an element may be an entire object or a portion of a larger assembly such as a bridge or a road, etc.

### BRIEF DESCRIPTION OF THE DRAWINGS

The invention will be better understood with the aid of the description of an embodiment given by way of example and illustrated by the figures, in which:
- Figure 1 shows the mini-slump cone test on UHPC matrices for a comparison of the final spread of two mixes;
- Figure 2 presents the comparative performances of the reference mix CM23 and several other mixes for the flexural tests on 4 PT bending plates;
- Figure 3 depicts a comparison of the uniaxial tensile behavior of two typical reference recipes CEMTECmultiscale® (CM0 and CM23);
- Figure 4 illustrates microscope photos of two mixes determined my means of image analysis of Scanning Electron Microscope (SEM);
- Figure 5 presents the Sieve analysis of all dry components except fibres, used in some of the formulations further described in this document;
- Figure 6 presents the classification of cementitious materials, including UHPFRC.

### DETAILED DESCRIPTION OF THE INVENTION

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

In this document, it is intended by UHPFRC: Ultra-High Performance Fibre Reinforced Concrete, characterized by a high compressive tensile strength (above 150Mpa, and preferably above 200 MPa) and high tensile strength (above 10MPa) and flexural or tensile strain-hardening depending on the fibrous mix.

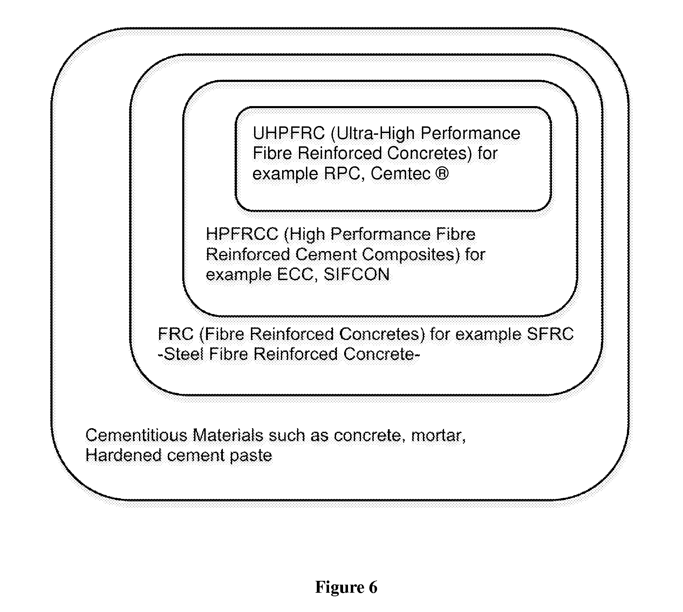

Figure 6 depicts the classification of cementitious composites as defined in the document "Structural Rehabilitations with Ultra-High Performance Fibre Reinforced Concretes (UHPFRC)", published in "Restoration of Buildings and Monuments/Bauinstandsetzen und Baudenkmalpflege", Vol. 12, No. 5 and 6, 453-465 (2006), cited from K. Habel, Structural behaviour of composite UHPFRC-concrete elements, Doctoral thesis n° 3036, Swiss Federal Institute of Technology, Lausanne, Switzerland (2004).

### Examples of UHPFRC formulations used in accordance with the invention

The following reference mixes (preexisting to the invention) have been used for comparison of properties:

UHPFRC CM23 (fibrous mix type CEMTECmultiscale®)

| Components | Origin | Mass [kg/m³] |
|---|---|---|
| Cement | CEM I 52.5N HTS - Le Teil - Lafarge (F) | 1433.7 |
| Silica fume | Silice thermique SEPR (F) | 372.8 |
| Sand 0.1 - 0.5 mm | Fontainebleau MN 30 (France) | 80.4 |
| Water | | 189.1 |
| Micro + macro fibres | Steel wool (Gervois - F) + Tecnafibres 10/20-(Redaelli tecna- I) | 706.5 |
| Superplasticizer | Chrysofluid Optima 175 (F) | 47.3 |

UHPFRC CM22_TKK (fibrous mix type CEMTECmultiscale®)

| Components | Origin | Mass [kg/m³] |
|---|---|---|
| Cement | CEM I 52.5N HTS - Le Teil - Lafarge (F) | 1392.4 |
| Silica fume | Silice thermique SEPR (F) | 362.0 |
| Sand 0.1 - 0.5 mm | Fontainebleau MN 30 (France) | 80.4 |
| Water | | 204.3 |
| Micro + macro fibres | Steel wool (Gervois - F) + OL 10/20 (BEKAERT) | 706.5 |
| Superplasticizer | Zementol Super S - TKK (SL) | 34.8 |

### Mixes according to the invention:

UHPFRC CM24 (fibrous mix type CEMTECmultiscale®).
Original mix used for the validation of the concept - no slope tolerance:

| Components | Origin | Mass [kg/m³] |
|---|---|---|
| Cement | CEM I 52.5 R - SALONIT Anhovo (SL) | 745.1 |
| Silica fume | Silice thermique SEPR (F) | 193.7 |
| Limestone filler | Durcal 15 - Omya (F) | 745.1 |
| Sand 0.1 - 0.5 mm | Fontainebleau MN 30 (France) | 80.4 |
| Water | | 199 |
| Micro + macro fibres | Steel wool (Gervois) + OL 10/20 (BEKAERT) | 706.5 |
| Superplasticizer | Zementol Super S - TKK (SL) | 49.2 |

UHPFRC CM32_11 (fibrous mix type CEMTECmultiscale®)
Mix with Slovenian cement, filler and superplasticizer, no slope tolerance, for casting horizontal surfaces or vertical faces in formworks.

| Components | Origin | Mass [kg/m³] |
|---|---|---|
| Cement | CEM I 52.5 R - SALONIT Anhovo (SL) | 766.6 |
| Silica fume | Silice thermique SEPR (F) | 153.3 |
| Limestone filler | "Fine" IGM - Zagorje (SL) | 766.6 |
| Water | | 224.8 |
| Micro + macro fibres | Steel wool (Gervois) + OL 10/20 (BEKAERT) | 706.5 |
| Superplasticizer | Zementol Super S - TKK (SL) | 55.2 |

UHPFRC CM32_13 (fibrous mix type CEMTECmultiscale®)
Mix with Slovenian cement, filler and superplasticizer, slope tolerance up to 5 %.

| Components | Origin | Mass [kg/m³] |
|---|---|---|
| Cement | CEM I 52.5 R - SALONIT Anhovo (SL) | 762.5 |
| Silica fume | Silice thermique SEPR (F) | 152.5 |
| Limestone filler | "Fine" IGM - Zagorje (SL) | 762.5 |
| Water | | 223.6 |
| Micro + macro fibres | Steel wool (Gervois) + OL 10/20 (BEKAERT) | 706.5 |
| Thyxotropizing admixture | Sika Extender T | 4.6 |
| Superplasticizer | Zementol Super S - TKK (SL) | 54.9 |

UHPFRC CM33_9 (fibrous mix type CEMTECmultiscale®)
Mix with Polish cement, filler and Slovenian superplasticizer, slope tolerance up to 3%.

| Components | Origin | Mass [kg/m³] |
|---|---|---|
| Cement | CEM I 52.5 R - Gorazde (PL) | 756.7 |
| Silica fume | Silice thermique SEPR (F) | 196.8 |
| Limestone filler | Piotrowice (PL) | 756.7 |
| Water | | 206.7 |
| Micro + macro fibres | Steel wool (Gervois) + OL 10/20 (BEKAERT) | 706.5 |
| Thyxotropizing admixture | Sika Extender T | 7.6 |
| Superplasticizer | Zementol Super S - TKK (SL) | 54.5 |

In order to establish the formulation and mixes of the invention, the following recipes (table 1) were first investigated. Mix type CM23 with Lafarge cement and super plasticiser from Rhodia was the target. The same fibrous mix (9 % micro + macro fibres) and Silica fume (SEPR - France) were used for both recipes. In mixes CM24 and CM32_13, limestone filler replaces 50% mass of the cement and a Slovene Super plasticizer (TKK Zementol Super S) is used. The following properties were analyzed:
- Workability of UHPC matrices with mini slump cone tests, and of UHPFRC with slump flow tests.
- Mechanical performance (force-mid-span deflection) on the basis of flexural tests on 4/4/16 cm prisms and 4 PT bending plates instrumented, (50 x 20 x 3 cm).
- Protective function by means of air permeability and capillary water absorption tests.

**Table 1 Mixes: references and investigated materials**

| Reference | Water/(Cement + Filler) | Cement (C) | Limestone Filler (LF) |
|---|---|---|---|
| CM23 | 0.155 | Lafarge CEM I 52.5 HTS | None |
| CM24 | 0.155 | Salonit CEM I 52.5 R | Durcal 15 (Omya) |
| CM32_13 | 0.170 | Salonit CEM I 52.5 R | IGM - Slovenia |

In a further step the concept was extended to the use of Slovenian limestone filler and later to a Polish cement, limestone filler and superplasticizer. The results (not shown here) obtained fully support the concept of cement replacement:
- equivalent workability with no significant loss of protective or mechanical properties.

### Rheology:

To consider the mini-slump test, the determination of t250 (time to flow at 250 mm diameter), D1,2 (diameters when flow is stopped, in two perpendiculars directions) and, if applicable, s (slump with respect to top of mini-cone), have been performed on the basis of the recipe CM24 matrix.

Recipes type CM24 matrix: Cement (C) ≅ 770 kg/m3; Limestone filler (LF = Durcal 15) ≅ 770 kg/m3; Silica Fume (SF = SEPR), SF/C=0.26, W=Water, SP = Superplasticizer (Total liquid + dry extract), W/(C+LF)=0.155, W/(C+LF+SF)=0.137, LF/C=1,Temperature laboratory ≅ 25 °C, Temperature mixes ≅ 30 °C, basis: SP(total)/(C+LF) = 3.3 %, SP(dry extract) )/(C+LF) = 1.16 % (basis) - batches of 2 litres - mixing speed changed when consistency change from dry to plastic occurred.

A comparison is made with mixes with Salonit cement CEM I 52.5, without limestone filler, SP total/C=2.5 %, SP dry/C=0.88 %, mix sequence: slow speed for 15 to 27' + high speed for 2'.

**Table 2: Workability test results**

| CASE | Cement [kg/m³] | Limestone Filler [kg/m³] | Silica fume (SF) [kg/m³] | SF/C [---] | t₂₅₀ [s] | D_{1,2} [mm] | D_{average} [mm] | Slump [cm] |
|---|---|---|---|---|---|---|---|---|
| A | 1614 | 0 | 210 | 0.13 | ∞ | 170/170 | 170 | 9 |
| B | 770 | 770 | 200 | 0.26 | 9,3 | 390/410 | 400 | n.a. |

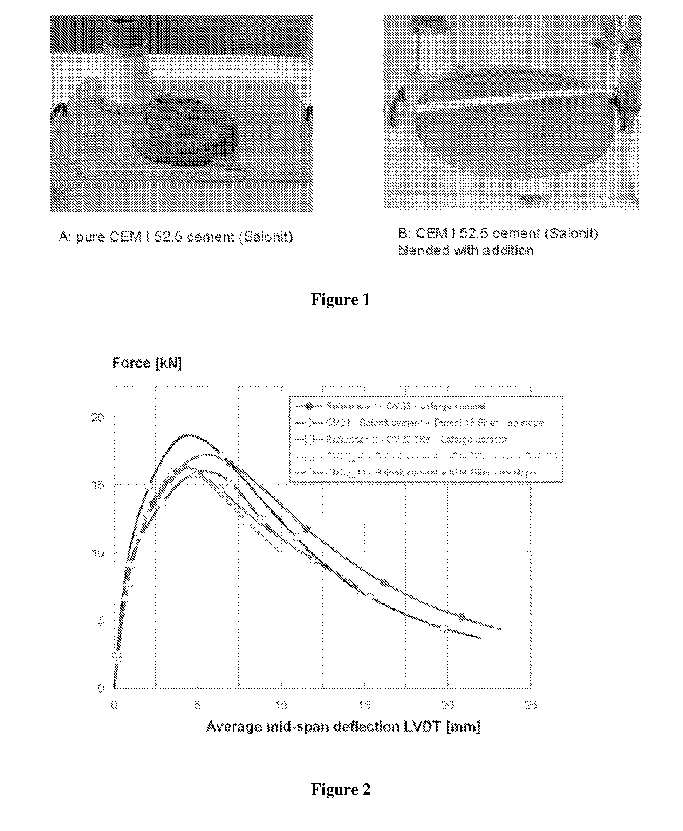

Figure 1 shows the mini-slump cone test on UHPC matrices for a comparison of the final spread of two mixes with or without cement replacement by limestone filler.
→Case A: impossible to achieve sufficient workability when fibres are added.
→Case B: excellent workability, comparable to reference UHPFRC mixes with Lafarge cement - perfectly adapted for addition of fibres at high dosages.

### Protective function:

Table 3 shows the comparative results at similar ages (28 days) of capillary absorption and air permeability tests after Torrent (average values) for the various types of UHPFRC investigated and for usual concretes as a reference point. The mix developed with the Slovenian cement and Superplasticizer (CM24), is clearly in the range of very low air permeability and capillary water absorption. Its long term protective function is granted.

**Table 3: Comparative transport properties**

| Reference | Air permeability [10⁻¹⁶ m²] | Capillary water absorption coefficient [g/m².h^{0.5}] |
|---|---|---|
| Bad concrete | 2 | 1200 |
| Good concrete | 0.03 | 400 |
| CM23 (target) | 0.003 | 45 (EPFL meas.) |
| CM24 (new) | 0.008 | 53 (EPFL meas.) |

### Mechanical performance:

Figure 2 presents the comparative performances of the reference mixes CM23 and CM22_TKK with mixes CM24, CM32_11 and CM32_13 developed with Slovene cement from Salonit, for the flexural tests on 4 PT bending plates (span: 420 mm). All curves are average results of 5 individual tests. Material CM24 with W/(C+LF))=0.155 achieves an equivalent level of performance to mix CM23 with W/C=0.155 and the same fibrous mix. Similarly, materials CM32_11 and CM32_13 with a W/(C+LF) ratio of 0.170 achieve the same level of performance as mix CM_22_TKK with W/C=0.163 and the same fibrous mix.

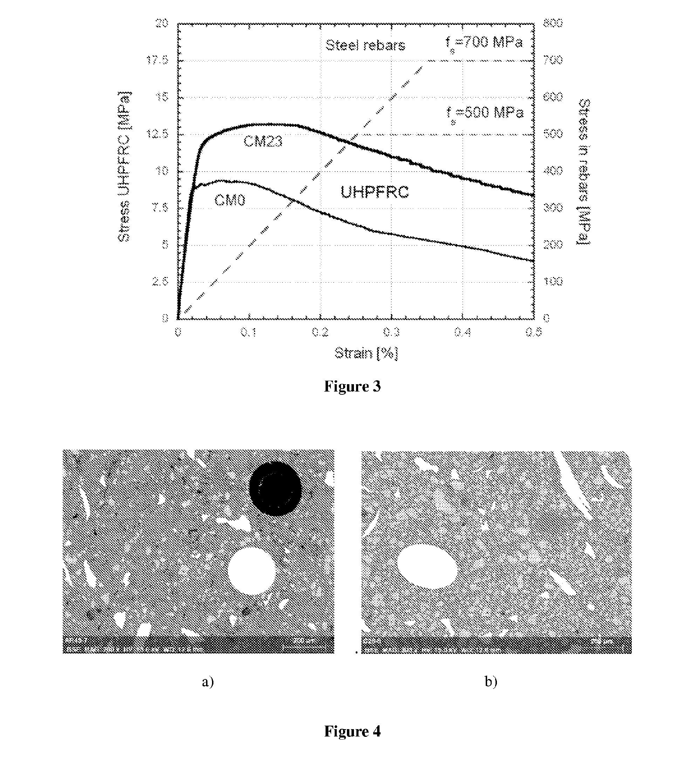

The uniaxial tensile behaviour of two typical reference recipes of the CEMTECmultiscale® (CM0 and CM23) family, measured on unnotched dogbone specimens is shown for comparison on figure 3 (average curves from 5 tests each). Both recipes are self-compacting. Tests were performed with fixed rigid boundary conditions, average curves at 28 days.

### Degree of hydration:

The degree of hydration after 3 month age of two mixes:
a) CM32_13 with SALONIT CEM I 52.5 cement and IGM Slovenian limestone filler (with 50 % cement replacement by limestone filler);
b) CM22_TKK: Lafarge CEM I 52.5 HTS cement - no limestone filler.

The mixes have been determined my means of image analysis of Scanning Electron Microscope (SEM). The resulting images are shown on figure 4 using the same scale for both images.

On image a) one can clearly distinguish the pale grey limestone filler and the small amount of unhydrated cement particles (light grey). On image b) the large quantity of unhydrated cement grains (light grey) can be seen. The white circle or ellipse are macro steel fibres. The white irregular shapes are micro steel fibres. The black circle is an air bubble. The degrees of hydration of cement determined by this method are:
- CM 22_TKK: 42.1 % +- 5.7
- CM32_13: 57.7 % +- 6

### Sieve analysis of dry components:

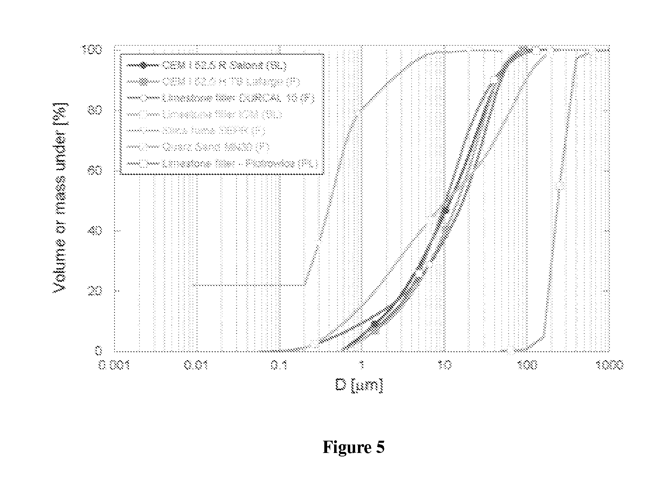

Figure 5 presents the Sieve analysis of all dry components except fibres, used in some of the formulations previously described. Following methods were used:
- for the quartz sand, standard sieving;
- for the cements and limestone fillers, laser granulometry under water;
- for the silica fume: X-Ray monitored gravity sedimentation (liquid).

For all components except silica fume and quartz sand, % volume passing is indicated.

For silica fume and quartz sand % mass passing is shown.

The above detailed description with reference to the drawings illustrates rather than limit the invention. There are numerous alternatives, which fall within the scope of the appended claims. For instance, the method, matrix and mixture according to the invention could also be applied to HPFRCC (High Performance Fibre Reinforced Cement Composites) such as ECC, SIFCON, SIMCON or DUCON, without departing from the invention.

The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude a combination of additional features, which corresponds to a combination of dependent claims.

## Claims

1. Method for the preparation of a cementitious matrix for High Performance Fibre Reinforced Cement Composites (HPFRCC), in particular Ultra-High Performance Fibre Reinforced Concrete (UHPFRC), in which at least 25 % and preferably at least 40 % of the cement mass is replaced by the equivalent mass of limestone filler, so that the resulting limestone filler content in percentage of dry mix is between 25 to 70 % of the matrix mass.

2. Method for the preparation of a cementitious matrix according to claim 1, in which substantially 50 % of the cement mass is replaced by the equivalent mass of limestone filler.

3. Method for the preparation of a cementitious matrix according to claim 1 or 2, in which the resulting limestone filler content in percentage of dry mix is between 35 to 45 % of the matrix mass.

4. Cementitious matrix for Ultra-High Performance Fibre Reinforced Concrete (UHPFRC) containing the following constituents (in % mass of dry mix):
a) 25 to 65 % Portland cement type CEM I;
b) 25 to 70 % of Limestone filler;
c) 5 to 15 % ultrafine mineral additions
d) 0 to 50 % fine sand with a diameter superior to 100 mm and lower than 5 mm.

5. Cementitious matrix according to claim 4, in which the Calcite (CaCo3) content of the limestone filler is superior to 80 %, and preferably superior to 90 %.

6. Cementitious matrix according to claim 4 or 5, in which the limestone filler particle diameter is between 0.1 and 100 microns.

7. Cementitious matrix according to any one of claims 4 to 6, further comprising 5 to 15 % ultrafine mineral additions.

8. Cementitious matrix according to claim 7, in which the ultrafine mineral additions is provided with silica fume with a diameter D90 smaller than 5 microns.

9. Cementitious matrix according to any one of claims 4 to 8, further comprising up to substantially 50 % fine sand with a diameter superior to 0.1 and lower than 5 mm.

10. Cementitious matrix according to any one of claims 4 to 9, in which the cement is Portland cement type CEM I 52.5 R or N.

11. Ultra-High Performance Fibre Reinforced (UHPFRC) cementitious mixture comprising the following constituents :
a) 20 to 45 % Portland Cement type CEM I
b) 20 to 45 % of Limestone filler;
c) 3 to 10 % ultrafine mineral additions;
d) 2 to 11 % and preferably 3 to 9 % reinforcing steel fibres.

12. UHPFRC cementitious mixture according to claim 11, in which the water/(cement + filler) ratio is between 0.120 and 0.250.

13. UHPFRC cementitious mixture according to claim 11 or 12, further comprising a superplasticizer, the superplasticizer dosage (total liquid + dry extract) being between 2 and 4 % of the Cement + Limestone filler total mass.

14. UHPFRC cementitious mixture according to any one of claims 11 to 13, in which the steel fibres are combined with or replaced by synthetic fibres, the fibre percentage being comprised between 0.5 to 4% and preferably between 0,5 and 2%.

15. Monolithic or composite structural member prefabricated or cast on site and obtained with of a cementitious mixture according to any one of claims 11 to 14.
